# EUROPEAN PATENT APPLICATION

(11) **EP 2 202 914 A1**
(43) Date of publication of application: **30.06.2010**
(21) Application number: 08172704.2
(22) Date of filing: 23.12.2008
(51) Int. Cl.: H04L 12/10, H04L 12/40, H04L 12/24, H04L 12/42

(54) **Power over ethernet in a redundant ring data network**

(71) Applicant: ABB Research Ltd., 8050 Zürich (CH)
(72) Inventor: Hansen, Kai, N-0383, Oslo (NO)
(74) Representative: Kock, Ina

(57) **Abstract**

A process control system including a plurality of controllers and devices, the devices including I/O modules, sensor modules and actuators (1, 2, 3,4, 5), which are connected to said system by a data communication network operated at least in part according to an Ethernet standard. The system also comprises one or more controller with an Ethernet switch functionality configured to support power over Ethernet (PoE). At least two said devices in a ring support power receiving on one first port and power supplying on a second port of a said device.

## Description

### TECHNICAL FIELD.

The present invention is concerned with data networks used in industrial control systems or process control systems. In particular it is concerned with a configuration for a data network using Ethernet with power over Ethernet in an industrial setting.

### TECHNICAL BACKGROUND

Power over Ethernet (PoE) is being used in consumer applications such as IP telephones. These IP devices are typically powered in a star topology where one switch provides both Ethernet switching function and power supply to one device on each port. Standards such as IEEE 802.3af and 802.3at PoE specifications provide a framework for delivery of power from power sourcing equipment (PSE) to a powered device (PD) over Ethernet cabling. In the field of industrial automation and industrial systems producers of Industrial Ethernet switches are beginning to make switches that support the PoE function. In industrial systems daisy chain configurations are used in preference to star topologies by tradition and to reduce the cost of installation.

This has been enabled by including a built-in Ethernet switch on each device, and especially for the time slotted networks such as EtherCAT and PROFINET IRT the topology is daisy chains to a loop.

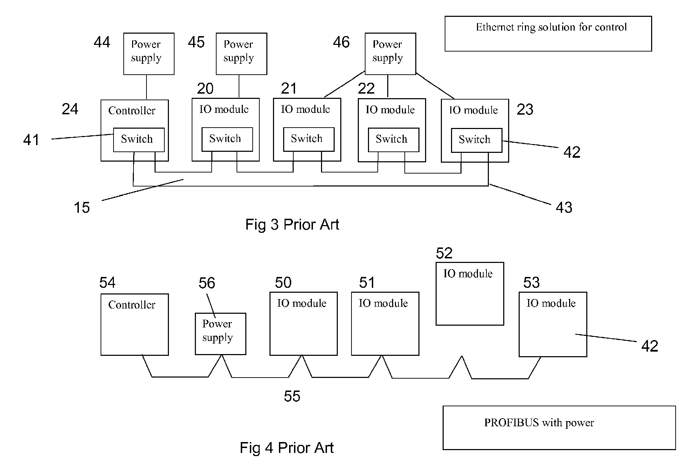

Fig 3 shows a known daisy chain configuration of devices in an automation system connected via an Ethernet connection. The figure shows a first daisy chain 15 network with a controller unit 24 which contains a build-in switch 41 and further four IO modules, 20, 21, 22, 23, that is devices sending and/or receiving Input and/or Output and each of these IO modules has a built-in switch, 42. The Ethernet network here has an optional network cable 43, connecting the last IO module back to the controller unit 24. This provides a redundancy solution since each IO module can be reached in two ways from the controller, either clockwise or anticlockwise in the Ethernet ring. In order for this to work a redundancy protocol must be implemented in the devices such as e.g. SPT (spanning tree protocol) or other efficient ring redundancy algorithm. In Fig 3 the power to each device is provided by separate power supplies. The power supply 44 provides power to the controller, the power supply 45 provides power to IO module 20 while the third power supply 46 provides power to the three IO modules 21, 22 and 23.

Fig 4 shows a known PROFIBUS daisy chain with power supply. The controller unit 54 is connected to the multidrop serial bus solution for PROFIBUS and IO modules 50, 51, and 53 are connected to the same physical multidrop bus. When removing one IO module eg 52 from the physical bus, the bus is not broken and both communication and power reaches the IO modules below. In Figure 4 the IO module 52 could be attached to the PROFIBUS without interfering with the communication to and power supply of IO module 53. The standard PROFIBUS PA provides such a solution and instead of IO modules, typically process industry sensors are connected to the PROFIBUS PA bus.

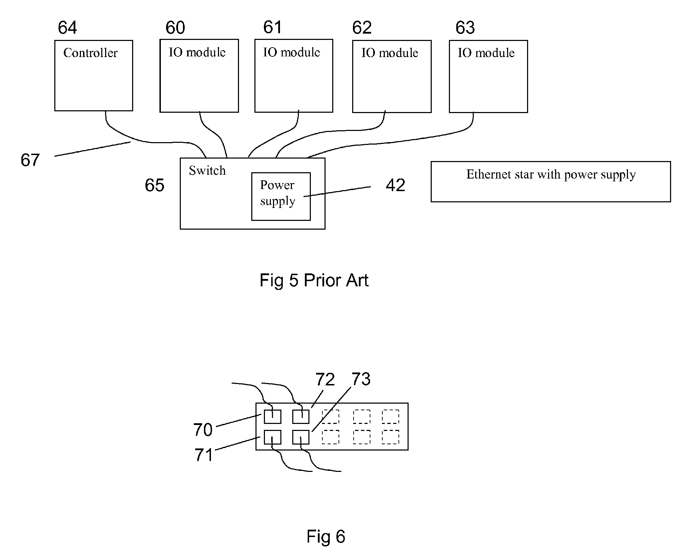

Fig 5 shows s known use of an Ethernet with power supply used for the same type of modules. A controller 64 and the IO modules 60-63 are connected to the Ethernet switch 65 which has a built-in power supply unit and provides power on the Ethernet cables 67 according to the standard.

In each of the examples above, the IO modules can be replaced by a sensor or an actuator or with a communication module that has a back plane communication and power solution to several IO modules.

The issue of power supply to monitoring and actuating devices in industrial automation is an important one, and in some parts of industrial automation installations security of power supply has to be ensured. For example, in US 7,081,827 entitled "Power over Ethernet-prioritized active splitter" assigned to Honeywell Inc., a PoE (power over Ethernet) prioritized active splitter is disclosed for a prioritized network having different priorities such as a network security system that uses an intelligent POE power supply with a prioritized back-up response. In the event of a power outage or disconnection, the critical high priority components remain connected via the Ethernet network and to be supplied with electrical power by a UPS system and also to communicate over the twisted wire pairs of the Ethernet network. This provides for uninterrupted power to high priority critical components but power to low priority components is reduced or lost when normal power supply is reduced or lost.

An other example is US2008100141 entitled "Redundant Power Supply For Power-Over-Ethernet" assigned to ST ELECTRONICS INFO COMM SYST, which describes a detailed solution to provide power to a device if it has two Ethernet power sources. This provides a electrical solution for a single device connected to two switches by merging power to a power combiner. The focus on this is on IP telephone systems.

### SUMMARY OF THE INVENTION

The aim of the present invention is to remedy one or more of the above mentioned problems. This and other aims are obtained by a system as characterised by claim 1. In a first aspect of the invention a process control system is described which comprises a plurality of controllers and devices including I/O modules, sensor modules and actuators, connected to said system by a data communication network operated at least in part according to an Ethernet standard, further comprising a communication interface with an Ethernet switch functionality configured to support power over Ethernet (PoE) wherein each of the at least two devices supports power receiving on one first port and power supplying on a second port.

In another embodiment of the invention a process control system is described which comprises a plurality of controllers and devices including I/O modules, sensor modules and actuators, connected to said system by a data communication network operated at least in part according to an Ethernet standard, further comprising a communication interface with an Ethernet switch functionality configured to support power over Ethernet (PoE) wherein at least one of the said communication interfaces receives power over Ethernet (PoE) from an external Ethernet switch.

In another embodiment of the invention a process control system is described which comprises a plurality of controllers and devices including I/O modules, sensor modules and actuators, connected to said system by a data communication network operated at least in part according to an Ethernet standard, further comprising a communication interface with an Ethernet switch functionality configured to support power over Ethernet (PoE) wherein the receiving first port provides power both to the device itself and to the second power supporting port.

In an embodiment of the invention a process control system is described which comprises a plurality of controllers and devices including I/O modules, sensor modules and actuators, connected to said system by a data communication network operated at least in part according to an Ethernet standard, further comprising a communication interface with an Ethernet switch functionality configured to support power over Ethernet (PoE) wherein the receiving first port and the supplying second port are each arranged to be able to be both receiver and provider of power dependent on an availability condition of the Ethernet connection where the availability is any from the group of: electrical connectivity, noise free communication, stable voltage and current, values for communication, values for power supply availability for the device.

In another embodiment of the invention a process control system is described which comprises a plurality of controllers and devices including I/O modules, sensor modules and actuators, connected to said system by a data communication network operated at least in part according to an Ethernet standard, further comprising a communication interface with an Ethernet switch functionality configured to support power over Ethernet (PoE) wherein at least two of said communication interfaces are arranged connected to a third communication interface of a controller or a switch in a ring configuration.

In another embodiment a process control system is described in which at least two of said communication interfaces are arranged as PROFINET devices connected to a third communication interface as a PROFINET controller in a ring configuration.

In another embodiment of the invention a process control system is described which comprises a plurality of controllers and devices including I/O modules, sensor modules and actuators, connected to said system by a data communication network operated at least in part according to an Ethernet standard, further comprising a communication interface with an Ethernet switch functionality configured to support power over Ethernet (PoE) wherein the redundancy logic (MRP - Medium Redundancy Protocol) as defined in the PROFINET standard is also used to determine if the two said Ethernet interfaces shall supply or receive power (PoE).

In another embodiment a process control system is described in which the Ethernet link that is not providing communication according to MRP is also not providing power, while the links that do provide communication also provide power.

In another embodiment of the invention a process control system is described which comprises a plurality of controllers and devices including I/O modules, sensor modules and actuators, connected to said system by a data communication network operated at least in part according to an Ethernet standard, further comprising a communication interface with an Ethernet switch functionality configured to support power over Ethernet (PoE) wherein in the status diagnostic according to MRP is modified to also include diagnostic information from the PoE functionality.

In another embodiment a process control system is described as above and in addition wherein the devices have monitoring on the power supply so that when they discover that a device connected by the Ethernet cable stops to providing or stops to receiving power, then the communication part of Ethernet is used to provide a message to a power manager which is the manager system or function that can do a reconfiguration of the power supply directions in a ring.

In another embodiment of the invention a process control system is described which comprises a plurality of controllers and devices including I/O modules, sensor modules and actuators, connected to said system by a data communication network operated at least in part according to an Ethernet standard, further comprising a communication interface with an Ethernet switch functionality configured to support power over Ethernet (PoE) wherein the said power manager takes action on a diagnostic message and send commands to units connected to the Ethernet ring on how these shall provide power or receive power on each of the two ports.

In another embodiment a process control system is described as above, and in addition, wherein the said devices and controllers have sufficient stored energy so that they can execute a reconfiguration of power supply without loosing communication ability if they o loose power through the active PoE connection.

In another embodiment a process control system is described as above, and in addition, wherein that the diagnostic system for power supply supervision is connected to the system, which diagnostic system uses a method as described in this specification according to any of the method claims.

In another embodiment of the invention a process control system is described which comprises a plurality of controllers and devices including I/O modules, sensor modules and actuators, connected to said system by a data communication network operated at least in part according to an Ethernet standard, further comprising a communication interface with an Ethernet switch functionality configured to support power over Ethernet (PoE) wherein the diagnostic part is connected accessible by a process operator workstation so that an operator may get an overview of the power supply status in addition to the other system status information and the status of the process under control.

The principle advantage of the present invention is that an Ethernet ring configuration provides not only redundancy for communication but also provide a redundant source of powering of smaller devices (IO, sensors, and the like). This is particularly advantageous in process automation and power applications where both high availability and low cost are required.

A daisy chain configuration may be enabled by including a built in switch on each device, and specially for the time slotted networks such as EtherCAT and PROFINET IRT the topology may be daisy chains to a loop but also for standards based on normal Ethernet solutions such as PROFINET IO, EtherNet/IP, Modbus TCP etc..

Power over Ethernet can be used also in a daisy chain if each device is arranged to support power receiving on one port and power supply on the second port and that the receiving port provides power both to the device itself and to the power supporting port. One advantage with this invention is thus a significant cost saving as one power supply can supply power to a number of devices without any special hardware for power supply in each device.

In another aspect of the invention, a method is described for monitoring a process control system including a plurality of controllers and devices including I/O modules, sensor modules and actuators, connected to said system by a data communication network operated at least in part according to an Ethernet standard, further comprising a communication interface with an Ethernet switch functionality configured to support power over Ethernet (PoE), wherein a power supply status for each Ethernet port that is capable of providing and/or receiving power is accessible to any computing part of the system which can act as a diagnostic and management system.

In another embodiment of the present invention a method is described for monitoring a process control system including a plurality of controllers and devices including I/O modules, sensor modules and actuators, connected to said system by a data communication network operated at least in part according to an Ethernet standard, further comprising a communication interface with an Ethernet switch functionality configured to support power over Ethernet (PoE), wherein the said power supply status information is accessible for monitoring through a protocol running on the top of the TCP/IP or UDP/IP protocol.

In another embodiment a method is described for monitoring a process control system is described as above, and in addition, wherein the said power supply status information is routed to a different management computer, not directly connected to the PoE ring.
In another embodiment of the present invention a method is described for monitoring a process control system including a plurality of controllers and devices including I/O modules, sensor modules and actuators, connected to said system by a data communication network operated at least in part according to an Ethernet standard, further comprising a communication interface with an Ethernet switch functionality configured to support power over Ethernet (PoE), wherein the said power supply status information is provided using the protocol SNMP (Simple Network Management Protocol).

In another embodiment a method is described for monitoring a process control system is described as above, and in addition, wherein the said power supply status information on SNMP is described in a corresponding MIB (Management Information Base) textual description.

In another embodiment of the present invention a method is described for monitoring a process control system including a plurality of controllers and devices including I/O modules, sensor modules and actuators, connected to said system by a data communication network operated at least in part according to an Ethernet standard, further comprising a communication interface with an Ethernet switch functionality configured to support power over Ethernet (PoE), further comprising displaying an SNMP enabled network device on a display means with a graphical user interface embodied as thin client running on any from the list of: workstation, portable computer, personal digital assistant, mobile phone, mobile computing device.

A computer program, and a computer program recorded on a computer-readable medium is disclosed in another aspect of the invention.

### BRIEF DESCRIPTION OF THE DRAWINGS

A more complete understanding of the method and system of the present invention may be had by reference to the following detailed description when taken in conjunction with the accompanying drawings wherein:
Figure 1 shows a schematic block diagram of a data network including networked devices connected by Ethernet lines and a Power over Ethernet enabled switch functionality according to an embodiment of the invention;
Figure 2 shows a schematic block diagram of a similar data network to the invention shown in Figure 1 with particular specialisation that Power over Ethernet enabled switches are incorporated in the controller module(s) in the network according to another embodiment of the invention;
Figure 3 shows a known Profibus network configuration, Figure 4 shows a known Profinet IO configuration, and Figure 5 shows a known star configuration with Power over Ethernet, each of Figures 3, 4 and 5 being from the prior art and shown only in order to assist understanding of the invention;
Figure 6 shows a schematic block diagram of a Ethernet switch according to another aspect of the invention of Figure 1.

### DESCRIPTION OF THE PREFERRED EMBODIMENTS

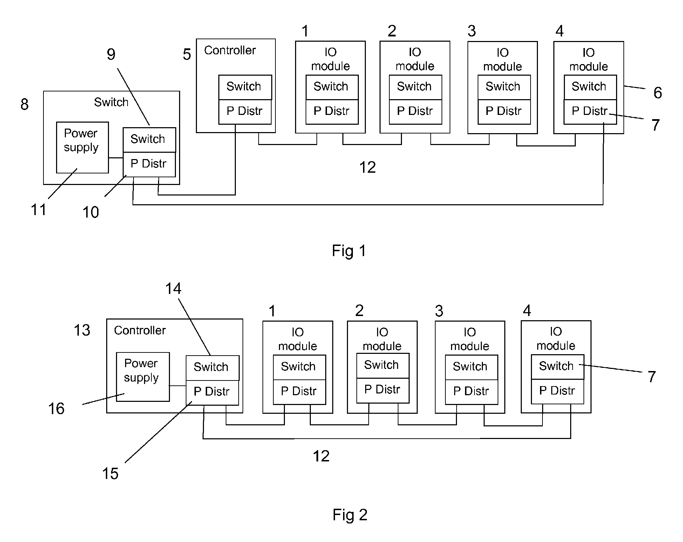

Figure 1 shows a configuration according to one aspect of the invention. Figure 1 shows 4 IO devices 1, 2, 3 and 4 and one controller 5 and one Ethernet switch unit 8 with a power supply 11. All these are connected by Ethernet cables configured as a loop 12. Each device has Ethernet level 2 switching functionality 9 and 6. Each device also has a Power Distribution unit 10 and 7. The external Ethernet switch 8 can be a standard Ethernet device, supporting Power over Ethernet (PoE) standard such as IEEE802.3af or a different PoE solution. Each cable in the Ethernet loop is capable of carrying both communication packages and power. The communication loop prevents packages going in circles by a standard protocol such as STP or the PROFINET specified protocol. PROFINET has specified one protocol, MRP - Medium Redundancy Protocol, which describes how one connection in the loop is not used in normal situation and how this connection is taken into use in a fault situation.
This invention combines this communication loop with an additional solution for breaking the loop of power distribution.

Each power distribution unit 7, 10, can be capable of accepting power or not from each port and to provide power or not to its neighbour from each of the ports. The logic implemented in each unit is capable of enabling or disabling the power supply. One embodiment of the invention is that the same logic that controls the sending of communication logic is used to control the power supply such that power is provided on the same lines that provide communication traffic.

The devices are preferably arranged with monitoring on the power supply so that when they discover that a device connected by the Ethernet cable stops to providing or stops to receiving power, then the communication part of Ethernet is used to provide a message to a power manager which is the power manager function or system that can do a reconfiguration of the power supply directions in a ring.

In Figure 2 one of the devices, in this case the controller, contains a power supply for PoE so that an external PSE switch is not necessary. The same arguments for redundancy of communication and power are used in Figure 2 as was used in Figure 1.

One or more of the devices in Figure 1 or two might be a device of a gateway type such that it provides communication to other devices to which this device communicates through a fieldbus, proprietary bus or backplane bus.

Figure 6 shows a schematic block diagram of an Ethernet switch according to another aspect of the invention of Figure 1 in which the device may be arranged to support power receiving on one port 70, 72 and power supply on the second port, and that the receiving port provides power both to the device itself and to the second power supporting port 71, 73. The device may include any number n of ports. In an embodiment, power receiving on the first ports 70, 72 may be supported only for diagnostic purposes. The receiving first ports 70, 72 and the supplying second ports 71, 73 are each arranged to be able to be both receiver and provider of power dependent on an availability condition of the Ethernet connection. An availability condition of the Ethernet connection may comprise items such as electrical connectivity, noise free communication, stable voltage and current, or other values important for communication and power supply availability for the device.

Field communication interface 20 may be provided with PSE functionality for PoE by means of including a chip which is a commercially available product, such as an AG800 chip from a company called Silver Telecom Ltd., in combination with redundancy logic and hardware enabling or disabling power between two such chips. Alternatively a single chip providing both source and sink of power on two Ethernet ports with a interface for enabling and disabling each of the options. Alternatively it is also possible for the power sink to use a combination solution such as discussed in US2008100141.

The above system is preferably a self configuring system. It includes functions arranged to carry out a low-level negotiation between connected devices before full power supply is started. The devices 1-4 and controllers will normally not require any particular configuration tools, but simply tell the switch that they are able to receive power by PoE.

The above system is preferably arranged with energy storage in the form of a battery, accumulator, capacitor and the like. The energy storage holds sufficient energy so that the devices and controllers can execute a reconfiguration of power supply without loosing communication ability if they loose power through the active PoE connection.

Another advantage with a PROFINET IO over Ethernet is that there is full support for Simple Network Management Protocol, SNMP. SNMP is the standard used for network management. This is an important technology used in all managed Ethernet switches and when using a switch chip in a field communication device module, it is most advantageous that SNMP is supported for increased access to network and device diagnostics. An advantage with the invention is that it is also possible to display status information of the modules in SNMP. This provides additional information and diagnostics about the network and devices in the network that could be shown in Network Management tools in addition to standard information such as failed cables, noisy lines, and traffic overload.

Status monitoring of any network device using SNMP may be carried out remotely, eg by using a thin client such as a web browser software to provide a graphical user interface on a remote workstation or portable computer, notebook or other computing device. For example a technician may use a PDA (Personal Digital Assistant) or even a mobile phone enabled with applications to handle HTML, or similar or equivalent thin clients to check status for, amongst other things, devices receiving or supplying power, and devices not receiving or supplying power. Communication may be established by wire or wirelessly.

The methods described, such as status monitoring with or without SNMP, and power managing as described above and in this specification may be carried out by a computer application comprising computer program elements or software code which, when loaded in a processor or computer, causes the computer or processor to carry out the method steps. The method described may be carried out by processing digital functions, algorithms and/or computer programs and/or by analogue components or analogue circuits or by a combination of both digital and analogue functions.

One or more microprocessor (or processors) comprises a central processing unit CPU performing the steps of a method according to one or more facets of the invention such as low-level device configuration, status monitoring via SNMP and/or power management. This method may be performed with the aid of one or more said computer programs, such as, which are stored at least in part in memory or in a memory storage device and as such accessible by the one or more processors or a computer. The or each processor may be in a control unit, switch 8, controller 13 or part thereof, or may as well run in a local or central control system.

It should be noted that while the above describes exemplifying embodiments of the invention, there are several variations and modifications which may be made to the disclosed solution without departing from the scope of the present invention as defined in the appended claims.

## Claims

1. A process control system including a plurality of controllers and devices including I/O modules, sensor modules and actuators (1, 2, 3,4, 5), connected to said system by a data communication network operated at least in part according to an Ethernet standard, further comprising a communication interface in the form of a powered device (8, 13) with an Ethernet switch functionality configured to support power over Ethernet (PoE), **characterised in that** each of at least two of said controllers and devices (1,2,3,4,5) support power receiving on one first port and power supplying on a second port.

2. A system according to claim 1, **characterised by** a redundant ring configuration comprising a powered device (8, 13) and at least two devices (1-4).

3. A system according to claim 1, **characterised in that** at least one of the said communication interfaces (1, 2, 3, 4) receives power over Ethernet (PoE) from an external Ethernet switch (8).

4. A system according to claim 1, **characterised in that** the receiving first port (70, 72) provides power both to the device (1, 2, 3, 4) itself and to the second power supporting port (71, 73).

5. A system according to claim 1, **characterised in that** the receiving first port and the supplying second port are each arranged to be able to be both receiver and provider of power dependent on an availability condition of the Ethernet connection where the availability is any from the group of: electrical connectivity, noise free communication, stable voltage and current, values for communication, values for power supply availability for the device.

6. A system according to claim 1, **characterised in that** at least two of said communication interfaces (1, 2) are arranged as PROFINET devices connected to a third communication interface (20) as a PROFINET controller in a ring configuration.

7. A system according to claim 6, **characterised in that** a redundancy logic Medium Redundancy Protocol (MRP) as defined in the PROFINET standard is also used to determine if the two said Ethernet interfaces (1, 2) shall supply or receive power (PoE).

8. A system according to claim 7, **characterized in that** the Ethernet link that is not providing communication according to MRP is also not providing power, while the links that do provide communication also provide power.

9. A system according to claim 7, **characterized in that** the status diagnostic according to MRP is modified to also include diagnostic information from the PoE functionality.

10. A system according to claim 1, **characterized in that** the devices have monitoring on the power supply so that when they discover that a device connected by the Ethernet cable stops to providing or stops to receiving power, then the communication part of Ethernet is used to provide a message to a power manager which is a manager system or function that can carry out a reconfiguration of the power supply directions in a ring.

11. A system according to claim 10, **characterized in that** the said power manager takes action on a diagnostic message and send commands to units (1,2,3,4) connected to the Ethernet ring on how these shall provide power or receive power on each of the two ports.

12. A system according to claim 1, **characterized in that** the said devices and controllers have sufficient stored energy so that they can execute a reconfiguration of power supply without loosing communication ability if they loose power through the active PoE connection.

13. A system according to claim 1, **characterized in that** diagnostic system for power supply supervision is connected to the system, which diagnostic system uses a method according to any of claims 15-20.

14. A system according to claim 13, **characterized in that** the diagnostic part is connected accessible by a process operator workstation so that an operator may get an overview of the power supply status in addition to the other system status information and the status of the process under control.

15. A method to monitor a process control system including a plurality of controllers and devices including I/O modules, sensor modules and actuators (1, 2, 3,4, 5), connected to said system by a data communication network operated at least in part according to an Ethernet standard, further comprising a communication interface with an Ethernet switch functionality configured to support power over Ethernet (PoE), **characterised in that** a power supply status for each Ethernet port that is capable of providing and/or receiving power is accessible to any computing part of the system which can act as a diagnostic and/or management system.

16. A method according to claim 15, **characterised in that** the said power supply status information is accessible through a protocol on the top of the TCP/IP or UDP/IP protocol.

17. A method according to claim 15, **characterised in that** the said power supply status information is routed to a different management computer, not directly connected to the PoE ring.

18. A method according to claim 15, **characterised in that** the said power supply status information is provided using the protocol Simple Network Management Protocol (SNMP).

19. A method according to claim 18, **characterised in that** the said power supply status information on SNMP is described in a corresponding Management Information Base (MIB) text description.

20. A method according to claim 18, **characterised by** displaying information about an SNMP enabled network device on a display means with a graphical user interface embodied as a thin client running on any from the list of: workstation, portable computer, personal digital assistant, mobile phone, mobile computing device.

21. A computer program comprising software code portions or computer code to cause a computer or processor to carry out the steps of a method according any of claims 15-20.
